# EUROPEAN PATENT APPLICATION

(11) **EP 3 977 840 A1**
(43) Date of publication of application: **06.04.2022**
(21) Application number: 20813687.9
(22) Date of filing: 10.03.2020
(51) Int. Cl.: A01B 69/00, G05D 1/02

(54) **OBSTACLE DETERMINATION SYSTEM AND AUTONOMOUS TRAVEL SYSTEM**

(30) Priority: 27.05.2019 JP 2019098259
(71) Applicant: Yanmar Power Technology Co., Ltd., Osaka-shi Osaka 530-8311 (JP)
(72) Inventor: ADACHI, Masahito, Osaka-shi, Osaka 530-0014 (JP)
(74) Representative: Dennemeyer & Associates S.A.
(86) International application number: PCT/JP2020/010147
(87) International publication number: WO 2020/240983

(57) **Abstract**

This obstacle determination system determines the presence/absence of an obstacle around a work vehicle that has a work machine mounted thereto. The obstacle determination system is provided with an obstacle sensor, a preparation unit, and a determination unit. The obstacle sensor detects an obstacle, and the detection range thereof covers a work machine. The preparation unit prepares operation information indicating the movement of said work machine which is detected by the obstacle sensor while keeping the work machine in operation. On the basis of the operation information and the detection result of the obstacle sensor, the determination unit determines the presence/absence of an obstacle by recognizing an object other than the work machine.

## Description

### TECHNICAL FIELD

The present invention chiefly relates to an obstacle determination system that makes determination of an obstacle around a working vehicle.

### BACKGROUND ART

A working vehicle disclosed in Patent Literature 1 is provided with an obstacle sensor. The obstacle sensor detects an obstacle present within an obstacle detection range. The working vehicle is capable of conducting a work through a working machine (working apparatus). The working machine is sometimes located within the obstacle detection range of the obstacle sensor. For this reason, the working vehicle has a masking function for preventing the working machine from being determined as an obstacle. The masking function refers to a function of making no determination of an obstacle with respect to a masking range specified in advance by a user within the obstacle detection range. The working machine is prevented from being determined as an obstacle by setting an area where the working machine can be located as the masking range.

### CITATION LIST

### Patent Literature

Patent Literature 1: JP 2018-113937 A

### DISCLOSURE OF INVENTION

### PROBLEMS TO BE SOLVED BY THE INVENTION

If, however, too large a masking range is set, the range, within which the obstacle sensor is able to detect an obstacle, is narrowed. If too small a masking range is set, the working machine may be detected as an obstacle.

The present invention has been made in view of such circumstances, and a primary object of the present invention is to provide an obstacle determination system capable of making a working machine hard to erroneously determine as an obstacle and determining the existence of an obstacle with respect to a wide area around a working vehicle.

### MEANS FOR SOLVING THE PROBLEMS

### EFFECT OF THE INVENTION

The problem to be solved by the present invention is as above, and the means for solving the problem and effects of the means are described below.

According to a first aspect of the present invention, an obstacle determination system with the following configuration is provided. In other words, the obstacle determination system determines existence of an obstacle around a working vehicle fitted with a working machine. The obstacle determination system includes an obstacle sensor, a creation unit, and a determination unit. The obstacle sensor detects the obstacle and has a detection range, within which the working machine is included. The creation unit detects the working machine with the obstacle sensor while causing the working machine to move and creates movement information indicating a movement of the working machine. The determination unit recognizes an object other than the working machine and determines the existence of the obstacle based on the movement information and a result of detection by the obstacle sensor.

Such configuration makes it possible to reduce the possibility that the working machine is erroneously recognized as an obstacle and determine the existence of an obstacle with respect to a wide area around the working vehicle. Consequently, the accuracy in obstacle detection is improved. In addition, the obstacle determination system is allowed to function irrespective of the shape of the working machine to be fitted. Therefore, obstacle determination is possible without any difficulty even if the working machine is replaced by a new one, the working machine is changed in shape, or a working tool and the like are attached to the working machine, for instance.

The obstacle determination system as above preferably has the following configuration. In other words, the obstacle sensor is capable of measuring a distance to a detection target. The creation unit uses the detection target, the distance to which as measured is less than a threshold, without using the detection target, the distance to which as measured is not less than the threshold, to create the movement information.

Owing to such configuration, it is possible to create appropriate movement information even if an object is present in a position distant from the working vehicle during the creation of the movement information.

In the obstacle determination system as above, it is preferable that, if determining that the movement information created by the creation unit differs from a result of detection of the working machine by the obstacle sensor during a work of the working vehicle, the creation unit updates the movement information based on the result of detection.

Such update makes it possible to make determination of an obstacle using corresponding movement information even if the working machine is somewhat changed in shape or another object is attached anew to the working machine.

According to a second aspect of the present invention, an autonomous travel system including the obstacle determination system as above and having the following features is provided. In other words, the working vehicle is capable of using a positioning satellite system to autonomously travel. Obstacle determination in the course of autonomous travel is settable to be effective or ineffective. If the obstacle determination is effective, acquisition of the movement information is included in autonomous travel start conditions. If the obstacle determination is ineffective, the acquisition of the movement information is not included in the autonomous travel start conditions.

Consequently, it is possible to recommend a user carrying out autonomous travel in the state, where the movement information has been acquired.

### BRIEF DESCRIPTION OF DRAWINGS

FIG. 1 is a side view illustrating a general structure of a tractor, to which an obstacle determination system according to an embodiment of the present invention is applied.
FIG. 2 is a block diagram illustrating a chief configuration of an autonomous travel system including the obstacle determination system.
FIG. 3 is a flowchart illustrating processing for creating movement information used for obstacle determination.
FIG. 4 is a diagram illustrating an image detected by a rear camera in a state where a working machine is in the highest position.
FIG. 5 is a diagram illustrating an image detected by the rear camera in a state where the working machine is in a midway position.
FIG. 6 is a diagram illustrating an image detected by the rear camera in a state where the working machine is in the lowest position.
FIG. 7 is a flowchart illustrating processing for permitting autonomous travel after preparation of the movement information is completed.
FIG. 8 is a flowchart illustrating the obstacle determination.
FIG. 9 is a diagram illustrating an image detected by the rear camera when an obstacle present in a part other than the working machine was detected during the obstacle determination.

### DESCRIPTION OF EMBODIMENTS

In the following, an embodiment of the present invention is described. An obstacle determination system according to the present embodiment is applied to a working vehicle that autonomously travels, and determines the existence of an obstacle around the working vehicle. In the following description, a system for causing the working vehicle to autonomously travel is referred to as an autonomous travel system. The autonomous travel system causes one or more working vehicles to autonomously travel in a farm field (traveling region) and conduct the whole or a part of a work. In the present specification, autonomous travel means that a configuration related to traveling that a working vehicle is possessed of is controlled by a controller such as an ECU so as to autonomously implement at least steerage for the traveling along a route specified in advance. Apart from the steerage, vehicle speed regulation or a work by a working machine may autonomously be implemented. In the autonomous travel, autonomous travel when a person is on a working vehicle and autonomous travel when no person is on a working vehicle are incorporated.

In the present embodiment, description is made employing a tractor as an exemplary working vehicle. The obstacle determination system of the present embodiment is applicable not only to a tractor but a rice seedling transplanting machine, a combine, a vehicle for civil engineering or construction, a snowplow, and the like. In the case of a rice seedling transplanting machine, for instance, a planting part for planting seedlings corresponds to the working machine and, in the case of a combine, a cutting part for cutting grain culms corresponds to the working machine.

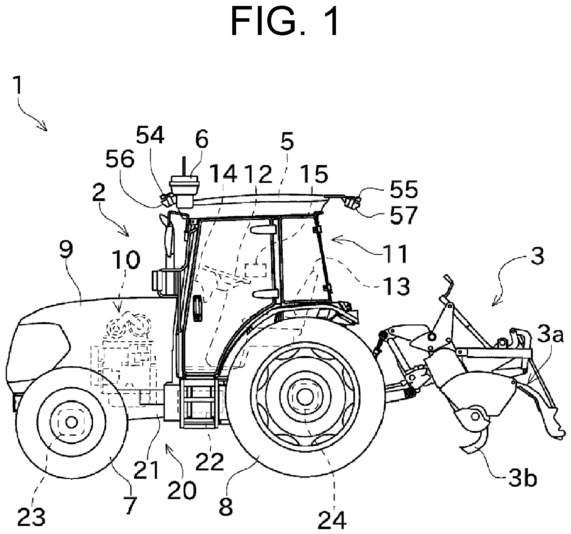

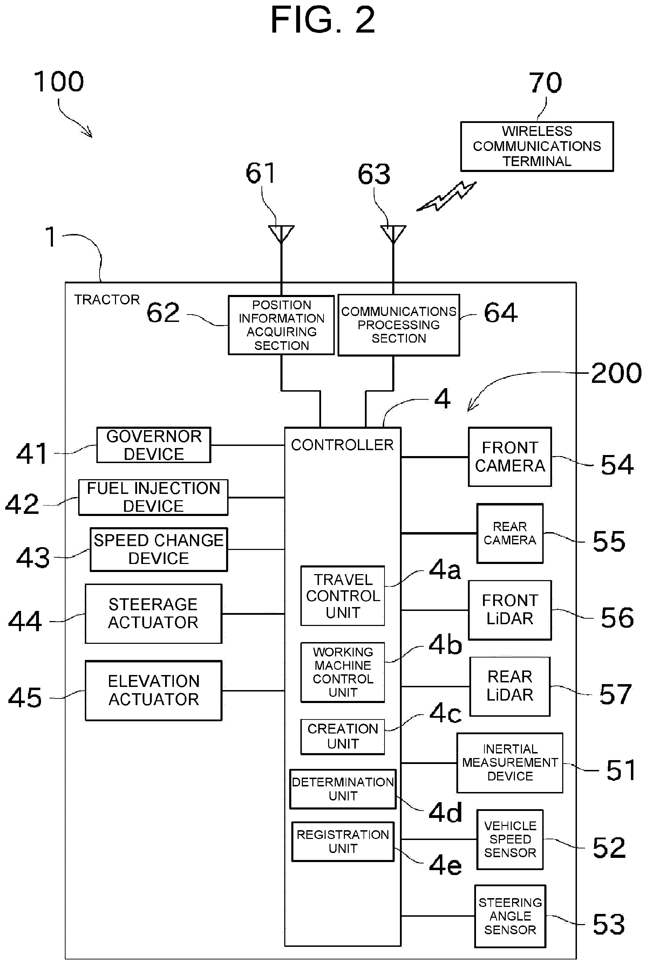

Referring to FIGS. 1 and 2, an autonomous travel system 100 is specifically described. FIG. 1 is a side view illustrating a general structure of a tractor 1. FIG. 2 is a block diagram illustrating a chief configuration of the autonomous travel system 100, which includes an obstacle determination system 200.

The tractor 1 illustrated in FIG. 1 is used in the autonomous travel system 100. The tractor 1 is so formed as to be movable based on an instruction received from a wireless communications terminal 70. The tractor 1 includes a traveling machine body (vehicle body part) 2 capable of autonomously traveling in a farm field. On the traveling machine body 2, a working machine 3 for conducting a farm work, for instance, is removably fitted.

The working machine 3 is exemplified by various working machines, such as a tiller, a plow, a fertilizer applicator, a grass mower, and a seeder, and the working machine 3 selected from among such working machines is fitted on the traveling machine body 2. In an example illustrated in FIG. 1, the working machine 3 as fitted is a tiller. Inside a cover 3a of the tiller, a tilling claw 3b is arranged, and the tilling claw 3b rotates on a vehicle width direction as a center of rotation so as to till a farm field.

Referring to FIG. 1, the structure of the tractor 1 is described in more detail. As illustrated in FIG. 1, of the traveling machine body 2 of the tractor 1, a front portion is supported by a pair of front wheels (vehicle wheels) 7 and 7 on the right and left and a rear portion is supported by a pair of rear wheels 8 and 8 on the right and left.

In the front portion of the traveling machine body 2, a hood 9 is arranged. Inside the hood 9, an engine 10 as a driving source for the tractor 1 and a fuel tank (not illustrated) are housed. The engine 10 can be constituted of a diesel engine as a nonlimitative example and may also be constituted of a gasoline engine. Apart from or instead of the engine, an electric motor may be used as a driving source.

In rear of the hood 9, a cabin 11 that a user is to get into is arranged. In the cabin 11, a steering handle (steerage tool) 12, a seat 13, a meter panel 14, a sub-display 15, and various operation tools for other operations are chiefly provided. The tractor 1 may include the cabin 11 or may not include the cabin 11.

The steering handle 12 is an operation tool for the steerage by the user. The seat 13 is to be taken by the user operating the tractor 1 or monitoring the autonomous travel. The meter panel 14 is capable of displaying the traveling speed, the engine speed, the state of the working machine, a warning lamp, and the like. The sub-display 15 is capable of displaying information on the autonomous travel, information on the state of the tractor 1 or the working machine 3, and the like.

As illustrated in FIG. 1, a chassis 20 of the tractor 1 is provided in a lower portion of the traveling machine body 2. The chassis 20 is constituted of a machine body frame 21, a transmission 22, a front axle 23, a rear axle 24, and the like.

The machine body frame 21 is a support member in a front portion of the tractor 1 and supports the engine 10 directly or through a vibration-proof member or the like. The transmission 22 changes power from the engine 10 and transmits the power as changed to the front axle 23 and the rear axle 24. The front axle 23 is so formed as to transmit the power input from the transmission 22 to the front wheels 7. The rear axle 24 is so formed as to transmit the power input from the transmission 22 to the rear wheels 8.

As illustrated in FIG. 2, the tractor 1 includes a controller 4. The controller 4 is formed as a known computer and includes an arithmetic device such as a CPU, a storage device such as a nonvolatile memory, and input and output parts, all being not illustrated. In the storage device, various programs, data related to the control of the tractor 1, and the like are stored. The arithmetic device is capable of reading various programs from the storage device and executing the programs. The cooperation between the hardware as above and software allows the controller 4 to serve as a travel control unit 4a, a working machine control unit 4b, a creation unit 4c, a determination unit 4d, and a registration unit 4e.

The travel control unit 4a controls the travel (forward movement, backward movement, stoppage, turning, and the like) of the traveling machine body 2. The working machine control unit 4b controls movements (upward and downward movements, driven motion, stoppage, and the like) of the working machine 3. The controller 4 can implement other control than the above (analysis of captured images, for instance). The controller 4 may be constituted of a single computer or a plurality of computers.

The travel control unit 4a implements vehicle speed control to control the speed of the tractor 1 and steerage control to steer the tractor 1. In the case of the vehicle speed control, the controller 4 controls either or both of the rotation speed of the engine 10 and the gear ratio of the transmission 22.

Specifically, the engine 10 is provided with a governor device 41 including an actuator not illustrated that changes the rotation speed of the engine 10. The travel control unit 4a is able to control the rotation speed of the engine 10 by controlling the governor device 41. On the engine 10, moreover, a fuel injection device 42 that adjusts the injection timing and the injection amount of the fuel to be injected (fed) into a combustion chamber of the engine 10 is mounted. The travel control unit 4a is able to stop the feed of fuel to the engine 10 and stop the driving of the engine 10, for instance, by controlling the fuel injection device 42.

On the transmission 22, a speed change device 43 that is a movable swash plate-type hydraulic, continuously variable transmission, for instance, is provided. The travel control unit 4a changes the angle of a swash plate of the speed change device 43 using an actuator not illustrated, so as to change the gear ratio of the transmission 22. By performing such processing, the vehicle speed of the tractor 1 is changed to a target vehicle speed.

In the case of the steerage control, the travel control unit 4a controls the rotation angle of the steering handle 12. Specifically, a steerage actuator 44 is provided in a midway portion of a rotation shaft (steering shaft) of the steering handle 12. With such configuration, if the tractor 1 travels along a route specified in advance, the controller 4 calculates an appropriate rotation angle of the steering handle 12 so that the tractor 1 may travel along the route, then drives the steerage actuator 44 and controls the rotation angle of the steering handle 12 so that the calculated rotation angle may be achieved.

The working machine control unit 4b controls a PTO switch based on whether a work conduct condition is met, so as to change the working machine 3 from a state of being driven to a state of being stopped, and vice versa. The working machine control unit 4b also controls the upward and downward movements of the working machine 3. Specifically, the tractor 1 includes an elevation actuator 45 constituted of a hydraulic cylinder or the like and arranged in the vicinity of a three-point link mechanism coupling the working machine 3 to the traveling machine body 2. The working machine control unit 4b drives the elevation actuator 45 so as to cause the working machine 3 to move upward or downward as appropriate, which allows a work to be conducted by the working machine 3 at a desired level.

The creation unit 4c, the determination unit 4d, and the registration unit 4e perform processing related to obstacle determination to be described later.

The tractor 1 including the controller 4 as described above is capable of controlling individual parts (the traveling machine body 2, the working machine 3, and the like) of the tractor 1 with the controller 4 and conducting an autonomous work while autonomously traveling in a farm field without the user getting into the cabin 11 and performing various operations.

Next, a configuration for acquiring information required for the autonomous travel is described. Specifically, the tractor 1 in the present embodiment includes a positioning antenna 61, a wireless communications antenna 63, an inertial measurement device 51, a vehicle speed sensor 52, and a steering angle sensor 53, as illustrated in FIG. 2 or the like.

The positioning antenna 61 receives a signal from a positioning satellite constituting a positioning system such as a satellite positioning system (GNSS). A positioning signal received by the positioning antenna 61 is input to a position information acquiring section 62 as a position detecting section illustrated in FIG. 2. The position information acquiring section 62 calculates and acquires position information on the traveling machine body 2 (strictly speaking, the positioning antenna 61) of the tractor 1 as latitude and longitude information, for instance. The position information as acquired by the position information acquiring section 62 is input to the controller 4 and used for the autonomous travel.

In the present embodiment, a high-accuracy satellite positioning system employing a GNSS-RTK method is used, to which the present invention is not limited, and any other positioning system may be used as long as position coordinates are obtained with high accuracy. For instance, the use of a differential positioning system (DGPS) or a stationary satellite-type satellite navigation augmentation system (SBAS) is thinkable.

The wireless communications antenna 63 is an antenna for exchanging data with the wireless communications terminal 70 operated by the user. A signal received by the wireless communications antenna 63 from the wireless communications terminal 70 is subjected to signal processing in a communications processing section 64 illustrated in FIG. 2 and then input to the controller 4. A signal to be transmitted from the controller 4 or the like to the wireless communications terminal 70 is subjected to signal processing in the communications processing section 64 and subsequently transmitted through the wireless communications antenna 63 and received by the wireless communications terminal 70.

The inertial measurement device 51 is a sensor unit capable of determining the position, the acceleration, and the like of the tractor 1 (the traveling machine body 2). Specifically, the inertial measurement device 51 includes a group of sensors, namely, angular velocity sensors and acceleration sensors attached to a first shaft, a second shaft, and a third shaft orthogonal to one another, respectively. The position of the tractor 1 refers to a roll angle, a pitch angle, and a yaw angle of the tractor 1, for instance.

The positioning antenna 61, the position information acquiring section 62, the wireless communications antenna 63, the communications processing section 64, and the inertial measurement device 51 constitute an antenna unit 6 illustrated in FIG. 1. The antenna unit 6 may further include an antenna for communicating with an external server and the like through a portable communications line.

The vehicle speed sensor 52 detects the vehicle speed of the tractor 1 and is provided on an axle between the front wheels 7 and 7, for instance. Data on a detection result obtained with the vehicle speed sensor 52 are output to the controller 4. The vehicle speed of the tractor 1 may not be detected by the vehicle speed sensor 52 but calculated from the time as spent by the tractor 1 in traveling a specified distance, on the basis of the positioning antenna 61.

The steering angle sensor 53 is a sensor for detecting the steering angle of the front wheels 7 and 7. In the present embodiment, the steering angle sensor 53 is provided on a kingpin not illustrated that is provided on the front wheels 7 and 7. Data on a detection result obtained with the steering angle sensor 53 are output to the controller 4. The steering angle sensor 53 may be provided on the steering shaft.

The tractor 1 includes a front camera 54, a rear camera 55, a front LiDAR 56, and a rear LiDAR 57 as obstacle sensors.

The front camera 54 images an area ahead of the tractor 1 so as to obtain an image (or a video). The rear camera 55 images an area behind the tractor 1 so as to obtain an image (or a video). An image is obtained such that information about color information (hue, saturation, and brightness) is set for each pixel. The front camera 54 and the rear camera 55 are mounted on a roof 5 of the tractor 1, for instance. The images obtained by the front camera 54 and the rear camera 55 are transmitted by the communications processing section 64 to the wireless communications terminal 70 through the wireless communications antenna 63. The wireless communications terminal 70, which has received the images, displays the contents of the images on a screen. The images obtained by the front camera 54 and the rear camera 55 are also used for obstacle determination (to be detailed later).

The front LiDAR 56 performs detection in an area ahead of the tractor 1. The rear LiDAR 57 performs detection in an area behind the tractor 1. A LiDAR is a device that emits pulsed light and uses reflected light to detect an object present in the surroundings. If an object is present, the LiDAR detects the direction of the object and the distance to the object based on the direction of the pulsed light when the reflected light was received, and the time, which elapsed before the reception of light. Based on the result of such detection, the LiDAR creates surroundings data indicating the object present in the surroundings. The front LiDAR 56 and the rear LiDAR 57 are mounted on the roof 5 of the tractor 1, for instance. The surroundings data detected by the front LiDAR 56 and the rear LiDAR 57 are used for the obstacle determination (to be detailed later). The surroundings data vary in form and can be in the form of a distance image. The distance image refers to an image with information on the distance from a LiDAR to a detection target set for each pixel.

The wireless communications terminal 70 illustrated in FIG. 2 includes a display and a touch panel. The wireless communications terminal 70 is a tablet terminal and may also be a smartphone or a notebook PC. If the tractor 1 is caused to autonomously travel in the state, where the user has got on the tractor 1, the same function that the wireless communications terminal 70 has may be imparted on the side of the tractor 1 (imparted to the controller 4, for instance). The user is able to refer to and check information displayed on the display of the wireless communications terminal 70. The user is also able to operate the touch panel, a hardware key or the like so as to transmit a control signal for controlling the tractor 1 (a temporary stop signal, for instance) to the controller 4 of the tractor 1. In addition, the wireless communications terminal 70 is capable of creating a route for the autonomous travel of the tractor 1, based on an operation by the user.

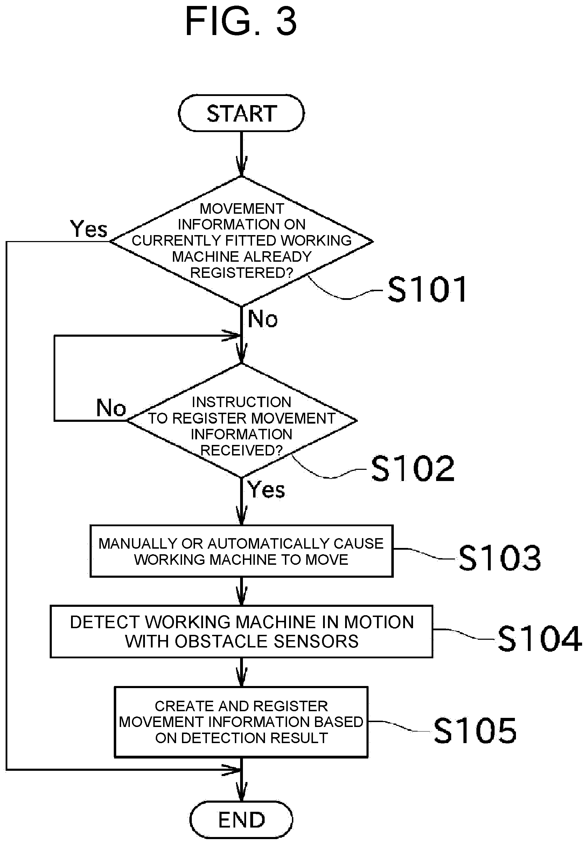

Referring to FIGS. 3 through 9 next, the obstacle determination is described. The obstacle determination is implemented by the obstacle determination system 200. The obstacle determination system 200 is realized by the obstacle sensors (the front camera 54, the rear camera 55, the front LiDAR 56, and the rear LiDAR 57) and the controller 4 (especially, the creation unit 4c, the determination unit 4d, and the registration unit 4e). In the present embodiment, the controller 4 on the side of the tractor 1 performs arithmetic processing related to the obstacle determination, while at least part of the processing may be performed by the wireless communications terminal 70.

Initially referring to FIGS. 3 through 6, preprocessing for implementing the obstacle determination is described. While the following description is made on the obstacle determination in an area behind the tractor 1, the same obstacle determination is possible in an area ahead of the tractor 1, as described later.

In the present embodiment, the working machine 3 is fitted on the rear of the tractor 1. The working machine 3 as such is included within a detection range of the rear camera 55 and the rear LiDAR 57. For this reason, in the present embodiment, information for excluding the working machine 3 from the result of detection by the obstacle sensors (hereinafter referred to as movement information) is created and registered for each working machine 3. A flow related to the creation of the movement information is described below.

The controller 4 determines, after the replacement of the working machine 3, during the preparation for the autonomous travel or after starting the tractor 1, for instance, whether the movement information has already been registered with respect to a currently fitted working machine 3 (step S101). The controller 4 can recognize the currently fitted working machine 3 based on information input by the user, for instance. The controller 4 may recognize the currently fitted working machine 3 by communicating with the working machine 3. If the movement information has already been registered about the currently fitted working machine 3, the movement information does not need to be created anew, so that the controller 4 terminates the processing.

If the movement information is not registered about the currently fitted working machine 3, the controller 4 displays, on the sub-display 15 or the like, such effect and a screen recommending the registration of the movement information. If it is determined that an instruction of the user to register the movement information has been received (step S102), the movement information is registered. Specifically, the controller 4 causes the working machine 3 to move, based on an operation by the user or automatically (step S103). Since it is necessary for the registration of the movement information to cause the working machine 3 to actually move, the movement information is registered after it is determined in step S102 that the instruction of the user to register the movement information has been received.

When the working machine 3 is being caused to move in step S103, the working machine 3 in motion is detected with the obstacle sensors (the rear camera 55 and the rear LiDAR 57 in the present embodiment) (step S104). The detection with the obstacle sensors is performed at specified time intervals, and a plurality of color images or a plurality of distance images (as the surroundings data) are obtained for each movement of the working machine 3.

The movement, which the working machine 3 is caused in step S103 to make, varies with the type of the working machine 3. In the case of the working machine 3, which is movable upward and downward, such as a tiller, the working machine 3 is caused to move upward and downward. In the case of the working machine 3, which is openable or rotatable, the working machine 3 is caused to open and close or rotate. On the other hand, the movement, which does not result in the change of a region occupied by the working machine 3 within a detection range of the obstacle sensors, (rotation of the tilling claw 3b, for instance) does not necessarily need to be made in step S103. In other words, it will be enough that a movement resulting in the change of a region occupied by the working machine 3 within the detection range of the obstacle sensors is made and detected with the obstacle sensors. As to the working machine 3, which makes two or more kinds of movements, it is preferable that all kinds of movements are detected with the obstacle sensors.

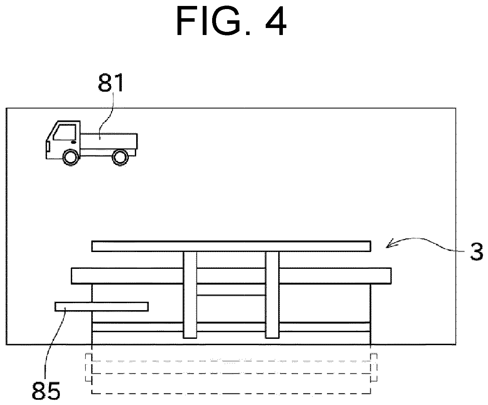

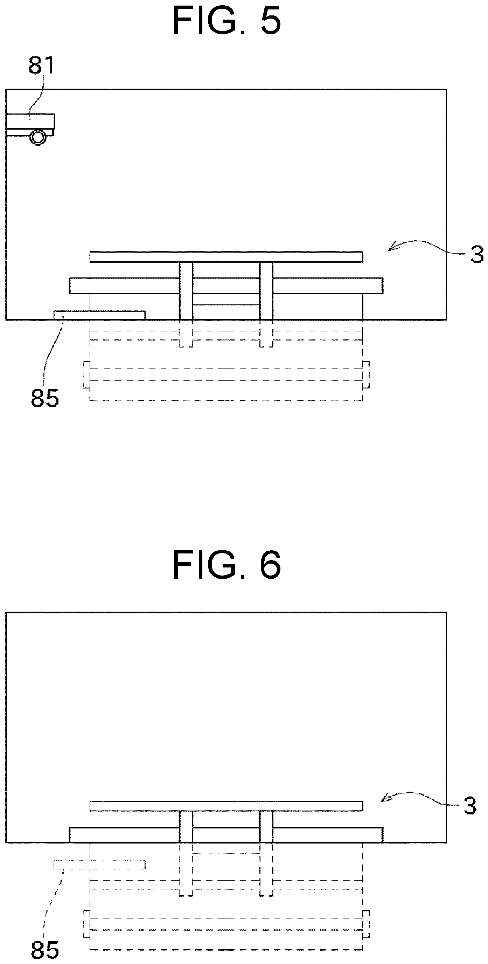

In FIGS. 4 through 6, images detected by the rear camera 55 during the upward and downward movements of the working machine 3 as a tiller are illustrated. FIG. 4 illustrates an image detected by the rear camera 55 in the state, where the working machine 3 is in the highest position. FIG. 5 illustrates an image detected by the rear camera 55 in the state, where the working machine 3 is in a midway position. FIG. 6 illustrates an image detected by the rear camera 55 in the state, where the working machine 3 is in the lowest position. While, in the present embodiment, only three images are illustrated for the description on the upward and downward movements of the working machine 3, it is preferable that more images are obtained.

In the figures as above, the working machine 3, to which a working tool 85 is attached, is illustrated. The working tool 85 is a tool for the maintenance of the tractor 1 or the working machine 3, a tool for conducting a work in a farm field, or the like. The working tool 85 is not an attachment for the working machine 3 but is attached at the user's discretion. Although not exactly constituting the working machine 3, the working tool 85 is attached to the working machine 3, moves along with the working machine 3 as one, and is consequently treated as a part of the working machine 3 during the obstacle determination by the obstacle determination system 200.

Next, the controller 4 (the creation unit 4c) creates the movement information (step S105), based on a detection result obtained in step S104. The movement information refers to information indicating how the working machine 3 is detected by an obstacle sensor when the working machine 3 moves. If the obstacle sensor is a camera, an extracted image with the working machine 3 extracted from a color image obtained by the camera, for instance, applies to the movement information. If the obstacle sensor is a LiDAR, an extracted image with the working machine 3 extracted from a distance image obtained by the LiDAR, for instance, applies to the movement information. The camera or the LiDAR images the working machine 3 in various states, so that a plurality of extracted images are basically contained in the movement information.

If the camera or the LiDAR detects not only the working machine 3 but the tractor 1 (the front wheels 7, the rear wheels 8, the hood 9 or the like), the tractor 1 may be included in the movement information. If a front obstacle sensor detects the front wheels 7, in particular, the front wheels 7 at different steering angles may be registered as the movement information by moving the steering handle 12, for instance. Therefore, in the following description on the movement information, "the working machine 3" can be read as "the working machine 3 and the tractor 1" or the like.

During the creation of the movement information, processing for removing information on anything other than the working machine 3 from the result of detection by the obstacle sensors (color images or distance images) is performed. The method for removing information on anything other than the working machine 3 is exemplified by a method for making a selection according to the distance. In recent years, a method for estimating the distance to a target even in an image obtained with a single camera is proposed. In the case of a LiDAR, the distance to a target can be detected based on information of each pixel of a distance image. Since the working machine 3 is deemed to be closer to the obstacle sensors than other targets, the movement information can be created using the target, the distance to which is less than a threshold, while not using the target, the distance to which is not less than the threshold. It is thus possible to exclude a target in a far position with a distance from the obstacle sensors not less than a threshold (a truck 81 illustrated in FIG. 4, a building not illustrated or the like) from the movement information. The working tool 85 as above is the same in distance to the obstacle sensors as the working machine 3, so that it is possible to create the movement information about the working machine 3 including the working tool 85.

If the obstacle sensor is a camera, the working machine 3 may be identified by image recognition. In other words, images of various working machines 3 in various states are learned in advance and matching with an image detected by the camera as an obstacle sensor, for instance, is performed so as to identify the working machine 3 as included in the detected image. If a person can be recognized by image recognition, it is preferable to exclude a region where a person is seen from an extracted image even if the distance from the obstacle sensor to the person is short. A nonhuman object may also be excluded from an extracted image if an object evidently different from the working machine 3 or the working tool 85 can be recognized.

The controller 4 associates the created movement information with information for identifying the working machine 3 (identification information) and registers the movement information in the registration unit 4e (step S105).

The movement information may be presented to the user so as to request confirmation before the registration of the movement information. To be specific: The movement information is an assemblage of extracted images with the working machine 3 extracted from color images or distance images, so that the extracted images are displayed on the sub-display 15 or the like. The user is able to confirm the movement information by viewing the extracted images. If an obstacle or the like is seen in an extracted image or the working machine 3 is not seen as a whole in an extracted image, it is preferable to correct the movement information. Specifically, the user can correct the movement information by selecting a region needing correction, for instance.

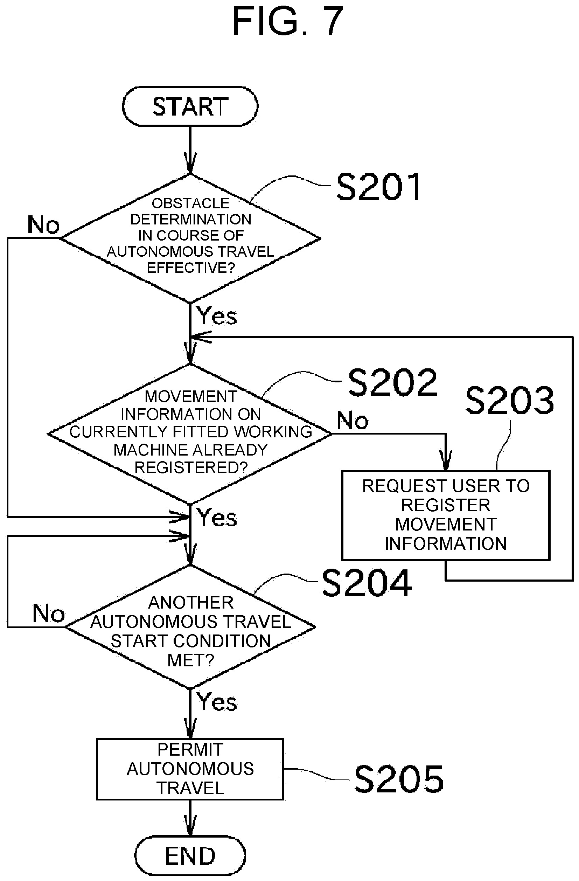

Referring to FIG. 7 next, description is made on processing for determining whether the start of the autonomous travel is to be permitted, based on whether the movement information has been registered.

The obstacle determination by the obstacle determination system 200 is chiefly implemented in the course of the autonomous travel. If the user gets on the tractor 1 and personally determines the existence of an obstacle, for instance, the autonomous travel is possible without the obstacle determination by the obstacle determination system 200. Consequently, the obstacle determination by the obstacle determination system 200 is changeable for a state of being effective or ineffective. In the present embodiment, when the obstacle determination by the obstacle determination system 200 is effective, the autonomous travel is only permitted if the movement information has been registered. A detailed description is made below.

The controller 4 or the wireless communications terminal 70 determines, during the preparation of the autonomous travel, for instance, whether the obstacle determination in the course of the autonomous travel is effective (step S201). If the obstacle determination is effective, the controller 4 or the wireless communications terminal 70 determines whether the movement information on the currently fitted working machine 3 has already been registered (step S202). If the movement information is not registered, it is not possible to appropriately implement the obstacle determination. Therefore, the controller 4 or the wireless communications terminal 70 requests the user to register the movement information (step S203). The request to the user is made by displaying, on the wireless communications terminal 70, the sub-display 15 or the like, a message that the autonomous travel cannot be started unless the movement information is registered, for instance.

If the movement information has already been registered or if the obstacle determination is ineffective in step S201, the controller 4 or the wireless communications terminal 70 determines whether another autonomous travel start condition (that the tractor 1 is located at a start point, for instance) is met (step S204). If another autonomous travel condition is met, the controller 4 or the wireless communications terminal 70 permits the autonomous travel (step S205).

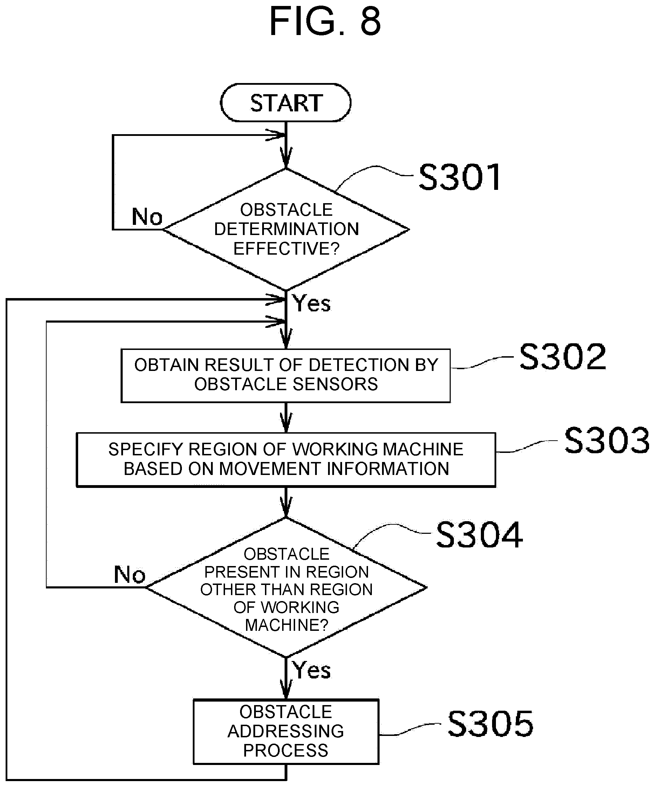

Referring to FIG. 8 next, the obstacle determination by the obstacle determination system 200 is described.

The controller 4 determines whether the obstacle determination is effective (step S301) and performs the following processing if the obstacle determination is effective. Initially, the determination unit 4d of the controller 4 obtains the result of detection by the obstacle sensors (step S302). In the detection result (color images and distance images) to be obtained, the working machine 3 is included. Then, the determination unit 4d specifies the region in an image of the detection result, in which region the working machine 3 is included, based on the movement information on the currently fitted working machine 3. Specifically, the determination unit 4d can identify the working machine 3, which is seen in an image of the detection result, by performing matching of the images of a plurality of working machines 3, which images are registered as the movement information, with the image of the detection result.

Next, the determination unit 4d determines whether an obstacle (a tree, a rock, a building, a person or the like) is present in a region in an image of the detection result other than the region of the working machine 3 (step S304). If determining that an obstacle is present in a region other than the region of the working machine 3, the determination unit 4d performs an obstacle addressing process (step S305). The obstacle addressing process refers to a process for warning the user, causing the tractor 1 to decelerate or stop, or causing the tractor 1 to turn and thereby avoid the obstacle. The obstacle addressing process may vary with the distance to the obstacle and the direction, in which the obstacle is located.

Detection of an obstacle in a region not including a working machine is also possible indeed by creating the masking range as described above based on the shape and movements of the working machine. During the creation of the masking range, however, a large masking range needs to be set so that the working machine in any position may not deviate from the masking range. Consequently, the accuracy in obstacle detection is reduced. On a tractor in particular, various types of working machines can be fitted, so that it is not practical to create the masking range in advance for all of such working machines. In addition, a working tool or the like possibly attached to a working machine may be recognized as an obstacle.

In contrast, in the present embodiment, the working machine 3 is caused to move so as to create the movement information, so that it is possible to determine the existence of an obstacle only in a region not including the working machine 3 with respect to any type of working machine 3. Moreover, even if the working tool 85 or the like is attached to the working machine 3, such working tool 85 or the like is not determined as an obstacle.

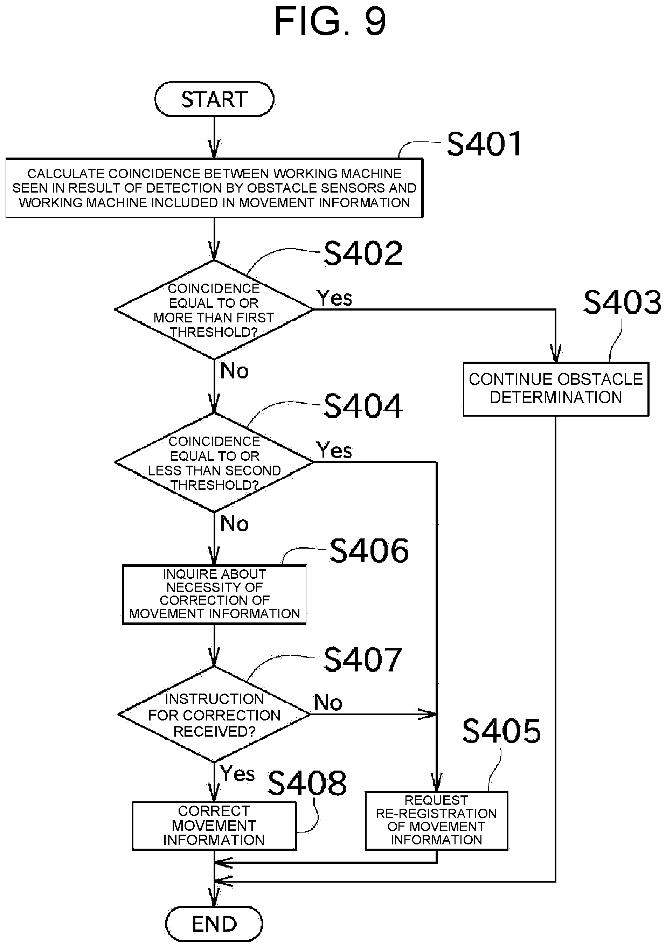

It is conceivable that the region of the working machine 3 cannot be specified based on the movement information in step S303. In that case, processing illustrated in FIG. 9 may be performed. A detailed description is made below.

Initially, the controller 4 calculates the coincidence between the working machine 3, which is seen in the result of detection by the obstacle sensors, and the working machine 3, which is included in the movement information (step S401). As the coincidence is higher, it is assumed that a working machine seen in the result of detection by the obstacle sensors is identified more definitely.

If determining that the coincidence is equal to or more than a first threshold (step S402), the controller 4 continues the obstacle determination in FIG. 8 (step S403) because the accuracy in identifying the working machine 3, which is seen in the result of detection by the obstacle sensors, is adequately high. If the coincidence is less than the first threshold, the controller 4 determines whether the coincidence is equal to or less than a second threshold (< the first threshold) (step S404). If the coincidence is equal to or less than the second threshold, the accuracy in identifying the working machine 3, which is seen in the result of detection by the obstacle sensors, is too low, so that a request for re-registration of the movement information is made to the user (step S405). The request to the user is made by displaying, on the wireless communications terminal 70, the sub-display 15 or the like, a message that re-registration of the movement information is required because the working machine 3 as fitted and the working machine 3 in the movement information are different from each other, for instance.

If the coincidence exceeds the second threshold but is less than the first threshold, the difference between the working machine 3, which is seen in the result of detection by the obstacle sensors, and the working machine 3, which is included in the movement information, is slight. Such difference is caused by the change in position of the working tool 85 or a slight change in position due to unsteadiness of the working machine 3, for instance. In that case, the movement information can be corrected based on the result of detection by the obstacle sensors. Therefore, the controller 4 inquires of the user about the necessity of correction of the movement information (step S406).

If determining that an instruction for correction has been received from the user (step S407), the controller 4 corrects the movement information based on the result of detection by the obstacle sensors (step S408). If an instruction to make no correction has been received from the user, the controller 4 requests the user to re-register the movement information (step S405).

The processing illustrated in FIG. 9 makes it possible to perform appropriate processing even if the coincidence between the working machine 3, which is seen in the result of detection by the obstacle sensors, and the working machine 3, which is included in the movement information, is low.

As described above, the obstacle determination system 200 of the present embodiment determines the existence of an obstacle around the tractor 1 fitted with the working machine 3. The obstacle determination system 200 includes the obstacle sensors (the front camera 54, the rear camera 55, the front LiDAR 56, and the rear LiDAR 57), the creation unit 4c, and the determination unit 4d. The obstacle sensors detect an obstacle and have the detection range, within which the working machine 3 is included. The creation unit 4c detects the working machine 3 with the obstacle sensors while causing the working machine 3 to move and creates the movement information, which indicates a movement of the working machine 3. The determination unit 4d recognizes an object other than the working machine 3 and determines the existence of an obstacle based on the movement information and the result of detection by the obstacle sensors.

Such configuration makes it possible to reduce the possibility that the working machine 3 is erroneously recognized as an obstacle and determine the existence of an obstacle with respect to a wide area around the tractor 1. Consequently, the accuracy in obstacle detection is improved. In addition, the obstacle determination system 200 is allowed to function irrespective of the shape of the working machine 3 to be fitted. Therefore, obstacle determination is possible without any difficulty even if the working machine 3 is replaced by a new one, the working machine 3 is changed in shape, or the working tool 85 and the like are attached to the working machine 3, for instance.

In the obstacle determination system 200 of the present embodiment, the obstacle sensors are capable of measuring the distance to a detection target. The creation unit 4c uses the detection target, the distance to which as measured is less than a threshold, without using the detection target, the distance to which as measured is not less than the threshold, to create the movement information.

Owing to such configuration, it is possible to create appropriate movement information even if an object is present in a position distant from the tractor 1 during the creation of the movement information.

In the obstacle determination system 200 of the present embodiment, if the movement information created by the creation unit 4c differs from the result of detection of the working machine 3 by the obstacle sensors during a work of the tractor 1, the movement information is updated based on the result of detection.

Such update makes it possible to make determination of an obstacle using corresponding movement information even if the working machine 3 is somewhat changed in shape or another object is attached anew to the working machine 3.

The autonomous travel system 100 in the present embodiment includes the obstacle determination system 200. The autonomous travel system 100 allows the tractor 1 to autonomously travel by the use of a positioning satellite system. In the autonomous travel system 100, obstacle determination in the course of autonomous travel is settable to be effective or ineffective. If the obstacle determination is effective, acquisition of the movement information is included in autonomous travel start conditions. If the obstacle determination is ineffective, acquisition of the movement information is not included in the autonomous travel start conditions.

Consequently, it is possible to recommend the user carrying out autonomous travel in the state, where the movement information has been acquired.

A preferred embodiment of the present invention has been described above, while the above configurations can be modified as follows.

In the embodiment as described above, the working machine 3 is fitted on the rear of the tractor 1 and the movement information is created so that the working machine 3 as such may not be determined as an obstacle. The tractor 1 can be fitted with the working machine 3 (a front loader, for instance) on the front. In that case also, the same processing makes it possible to prevent the working machine 3 on the front from being determined as an obstacle.

The flowcharts presented in the above embodiment are each an example, and part of processes may be omitted or changed in contents or a new process may be added. If the movement information has already been registered in step S101, for instance, any particular process is not performed, while whether to re-register the movement information may be inquired of the user.

In the above embodiment, description is made on an exemplary configuration including cameras and LiDARs as obstacle sensors, while either the cameras or the LiDARs may be omitted. Moreover, a sensor that is neither a camera nor a LiDAR (an infrared sensor or a sonar, for instance) may also be used as an obstacle sensor.

### DESCRIPTION OF REFERENCE NUMERALS

- 1: tractor (working vehicle)
- 4: controller
- 4c: creation unit
- 4d: determination unit
- 4e: registration unit
- 54: front camera (obstacle sensor)
- 55: rear camera (obstacle sensor)
- 56: front LiDAR (obstacle sensor)
- 57: rear LiDAR (obstacle sensor)
- 100: autonomous travel system
- 200: obstacle determination system

## Claims

1. An obstacle determination system that determines existence of an obstacle around a working vehicle fitted with a working machine, the obstacle determination system comprising:
an obstacle sensor to detect the obstacle and having a detection range, within which the working machine is included;
a creation unit that detects the working machine with the obstacle sensor while causing the working machine to move and creates movement information indicating a movement of the working machine; and
a determination unit that recognizes an object other than the working machine and determines the existence of the obstacle based on the movement information and a result of detection by the obstacle sensor.

2. The obstacle determination system according to claim 1, wherein
the obstacle sensor is capable of measuring a distance to a detection target, and
the creation unit uses the detection target, the distance to which as measured is less than a threshold, without using the detection target, the distance to which as measured is not less than the threshold, to create the movement information.

3. The obstacle determination system according to claim 1 or 2, wherein
if determining that the movement information created by the creation unit differs from a result of detection of the working machine by the obstacle sensor during a work of the working vehicle, the creation unit updates the movement information based on the result of detection.

4. An autonomous travel system comprising the obstacle determination system according to any one of claims 1 through 3, wherein
the working vehicle is capable of using a positioning satellite system to autonomously travel,
obstacle determination during autonomous travel is settable to be effective or ineffective,
if the obstacle determination is effective, acquisition of the movement information is included in autonomous travel start conditions, and
if the obstacle determination is ineffective, the acquisition of the movement information is not included in the autonomous travel start conditions.
